# EUROPEAN PATENT APPLICATION

(11) **EP 3 425 193 A1**
(43) Date of publication of application: **09.01.2019**
(21) Application number: 17759244.1
(22) Date of filing: 01.03.2017
(51) Int. Cl.: F03B 17/02, F03G 7/00

(54) **HYDRAULIC WORKING OCCUPATION DEVICE**

(30) Priority: 02.03.2016 CN 201610116403
(71) Applicant: Shen, Li, Beijing 100025 (CN)
(72) Inventor: CHEN, Lianyong, Beijing 100025 (CN); SHEN, Li, Beijing 100025 (CN)
(74) Representative: FRKelly
(86) International application number: PCT/CN2017/075350
(87) International publication number: WO 2017/148393

(57) **Abstract**

A hydraulic working occupation apparatus includes: a hydraulic forming mechanism; an output element; a ball elbow mechanism connected to the hydraulic forming mechanism; and an occupation piston sleeve (25) connected to the ball elbow mechanism, wherein when a high pressure liquid is input, the high pressure liquid acts on the output element, so that the output element moves towards outside of the liquid, thereby outputting work done by liquid pressure; the ball elbow mechanism generating the location deformation drives the occupation piston sleeve (25) to move, so that the occupation piston sleeve (25) and a liquid therein make up for a liquid space left by the output element after the output element moves outwards, and when the output element moves back into the liquid, the ball elbow mechanism and the occupation piston sleeve (25) return to original locations. By using the occupation apparatus, when a working piston works towards outside of a liquid under the effect of hydraulic pressure, an occupation piston sleeve (25) and a liquid therein can occupy a liquid-off space of the piston in time, to ensure that the high liquid level does not rise and fall or the pressure of the high hydraulic pressure does not change, thereby avoiding unstable working and wastes of high pressure liquids.

## Description

### Technical Field

The present invention relates to the field of mechanical technologies, and in particular, to a hydraulic working occupation apparatus.

### Background Art

In the prior art, when a liquid applies pressure to and works on a piston in the liquid, space left by the piston in the liquid is instantaneously supplemented by a subsequent liquid. In this way, if high hydraulic pressure is caused by a high-level liquid, the liquid level needs to be lowered, and the pressure applied to piston work changes with the liquid level change, and consequently, the stability of the piston work is affected. If a high pressure liquid is supplied by an airtight hydraulic container, liquids need to be added, and the liquid volume changes, causing wastes, and also making pressure fluctuate.

However, currently, there is no apparatus that can conveniently and easily resolve the foregoing problems with little energy consumption.

### Summary of the Invention

The objective of the present invention is to overcome the disadvantages of the prior art, and provide a hydraulic working occupation apparatus; when a working piston works towards outside of a liquid under the effect of hydraulic pressure, an occupation piston sleeve and a liquid therein can occupy a liquid-off space of the piston in time, to ensure that the high liquid level does not rise and fall or the pressure of the high hydraulic pressure does not change, thereby avoiding unstable working and wastes of high pressure liquids.

To achieve the foregoing objective of the present invention, the hydraulic working occupation apparatus of the present invention includes: a hydraulic forming mechanism for forming liquid pressure; an output element, a part of which is placed in a liquid; a ball elbow mechanism that is connected to the hydraulic forming mechanism and that can generate a location deformation under the effect of an external force; and an occupation piston sleeve connected to the ball elbow mechanism, wherein when a high pressure liquid is input, the high pressure liquid acts on the output element, so that the output element moves towards outside of the liquid, thereby outputting work done by liquid pressure, the ball elbow mechanism generating the location deformation drives the occupation piston sleeve to move, so that the occupation piston sleeve and a liquid therein make up for a liquid space left by the output element after the output element moves outwards, and when the output element moves back into the liquid, the ball elbow mechanism and the occupation piston sleeve return to original locations.

The location deformation of the ball elbow mechanism under the effect of an external force includes: under the effect of the external force, the ball elbow mechanism rotate to change an angle; and the ball elbow mechanism generate a displacement in a direction having an included angle with a direction of the external force when the ball elbow mechanism changes the angle.

When the high pressure liquid is input and the high pressure liquid makes, by using the ball elbow mechanism, the output element move outwards, the occupation piston sleeve performs direct occupation, or when the high pressure liquid is input and the high pressure liquid flows into a liquid container to make the output element move outwards, the occupation piston sleeve performs indirect occupation.

The ball elbow mechanism includes: a ball rotating pair or a shaft rotating pair; a force transfer mechanism connected to the ball rotating pair or the shaft rotating pair; and a frame connected to the ball rotating pair or the shaft rotating pair.

The shaft rotating pair is a shaft sleeve type shaft rotating pair, a shaft hole type shaft rotating pair, or a monoaxial shaft rotating pair.

The shaft sleeve type shaft rotating pair is a shaft wheel type shaft rotating pair or a holding shaft type shaft rotating pair.

The force transfer mechanism is a mutual propping type force transfer mechanism, or a mutual pulling type force transfer mechanism.

The mutual propping type force transfer mechanism is a rod propping type, lever type, gear type, dual rotation angle type, or a wheel band type mechanism.

The mutual pulling type force transfer mechanism is a gear type, dual friction type, or dual inclined plane mutual pulling type mechanism.

Generating, by the ball elbow mechanism, a location deformation under the effect of an external force is implemented by using a lateral movement mechanism.

Compared with the prior art, the hydraulic working occupation apparatus of the present invention has the following advantages:
According to the hydraulic working occupation apparatus of the present invention, when a working piston works towards outside of a liquid under the effect of hydraulic pressure, an occupation piston sleeve and a liquid therein can occupy a liquid-off space of the piston in time, to ensure that the high liquid level does not rise and fall or the pressure of the high hydraulic pressure does not change, thereby avoiding unstable working and wastes of high pressure liquids.

The present invention is specifically described below with reference to the accompanying drawings.

### Brief Description of the Drawings

FIG. 1 is a schematic diagram of single group downward movement of a direct type ball elbow mechanism attached with a gear type force transfer mechanism;
FIG. 2 is a schematic diagram of single group upward movement of an indirect type dual rotation angle type force transfer mechanism;
FIG. 3 is a schematic diagram of single group upward movement of an indirect type friction dual reverse mutual pulling type mutual pulling mechanism;
FIG. 4 is a schematic diagram of a gear type in an indirect type mutual pulling mechanism;
FIG. 5 is a schematic diagram of an inclined plane dual reverse mutual pulling type in an indirect type mutual pulling mechanism;
FIG. 6 is a schematic diagram of dual group middle movement of a direct type wheel band type force transfer mechanism;
FIG. 7 is a schematic diagram of replacing a ball rotating pair with a shaft hole type rotating pair on a direct type working end;
FIG. 8 is a partial simplified schematic diagram of a rod propping type in a force transfer mechanism;
FIG. 9 is a schematic diagram of upper occupation of a shaft type rotating pair and single group downward movement of a working manner in a direct type;
FIG. 10 is a schematic diagram of direct type occupation of supporting point movement type single group upward movement;
FIG. 11 is a partial schematic diagram of a sliding type single group upper translation structure;
FIG. 12a is a middle cross sectional view of a dual shaft wheel type in place of dual balls;
FIG. 12b is a left view of FIG. 12a;
FIG. 13 is a middle cross sectional view of a shaft wheel type in place of a single ball;
FIG. 14a is a schematic diagram of outside of a dual arc holding shaft type shaft wheel; and
FIG. 14b is a top view of FIG. 14a.

### Detailed Description of the Invention

The present invention is further described in detail below with reference to the accompanying drawings and specific implementations.

The present invention provides a hydraulic working occupation apparatus, which is an apparatus that occupies, when an output element inserted into a liquid works due to hydraulic pressure, a liquid space left by the output element after the output element leaves the liquid, and includes: a hydraulic forming mechanism for forming liquid pressure; an output element, a part of which is placed in a liquid; a ball elbow mechanism that is connected to the hydraulic forming mechanism and that can generate a location deformation under the effect of an external force; and an occupation piston sleeve connected to the ball elbow mechanism, wherein when a high pressure liquid is input, the high pressure liquid acts on the output element, so that the output element moves towards outside of the liquid, thereby outputting work done by liquid pressure; the ball elbow mechanism generating the location deformation drives the occupation piston sleeve to move, so that the occupation piston sleeve and a liquid therein make up for a liquid space left by the output element after the output element moves outwards, and when the output element moves back into the liquid, the ball elbow mechanism and the occupation piston sleeve return to original locations. Preferably, the output element may use a piston that can be connected to another component and that is configured to convert pressure energy of a liquid into energy for movement of another component or energy in another form (briefly referred to as a working piston below).

The basic principle of the hydraulic working occupation apparatus of the present invention is that the ball elbow mechanism that can resist reverse hydraulic pressure and that can generate a displacement by using a rotation angle is used as a core, and under the effect of an external force, the ball elbow mechanism generates the location deformation while resisting the reserve hydraulic pressure and moves from inclination to straightness. With movement of the ball elbow mechanism, the occupation piston sleeve connected to the ball elbow mechanism moves, and when the working piston makes displacement and works towards outside of the liquid, the occupation piston sleeve and the liquid in the occupation piston sleeve move along the liquid flowing direction, to occupy a liquid space left due to outward movement of the working piston. When the working piston returns back under the effect of the external force, under a condition that hydraulic pressure is cut off, the ball elbow mechanism also moves reversely to make the occupation piston sleeve withdrawn, so as to complete one cycle.

According to the foregoing principle, the technical solution that implements the present invention is: the apparatus of the present invention includes a hydraulic forming mechanism, a working piston that works due to hydraulic pressure, and a ball elbow mechanism. In the several parts, the ball elbow mechanism is the most important core part, and can generate a location deformation under the effect of an external force; generating the location deformation includes the following steps: under the effect of the external force, the ball elbow mechanism rotate to change an angle; and the ball elbow mechanism generate a displacement in a direction having an included angle with a direction of the external force when the ball elbow mechanism changes the angle. Generating, by the ball elbow mechanism, the location deformation during single group translation due to an external force may be implemented by using a force application lateral movement mechanism (briefly referred to as a "lateral movement mechanism").

The ball elbow mechanism of the present invention includes: a ball rotating pair or a shaft rotating pair; a force transfer mechanism connected to the ball rotating pair or the shaft rotating pair; and a frame connected to the ball rotating pair or the shaft rotating pair. During manufacturing, the force transfer mechanism and the frame may be separately manufactured, or the force transfer mechanism may be enabled to have a function of the frame as well.

The ball rotating pair of the present invention includes: a sphere connected to the occupation piston sleeve; a first flange plate that is sleeved on one side of the sphere and in contact with an outer circumferential surface thereof, and connected to another piston sleeve; and a second flange plate that is sleeved on the other side of the sphere and in contact with the outer circumferential surface thereof, where the first flange plate and the second flange plate are connected together by using a fastening member (such as a bolt), and the sphere is clamped between the first flange plate and the second flange plate, and the first flange plate and/or the second flange plate can rotate relative to the sphere, thereby forming a rotating pair that can rotate relatively. In addition, the two piston sleeve connection manners are exchangeable.

The shaft rotating pair of the present invention includes shaft sleeve type, shaft hole type, and monoaxial rotating pairs.

The shaft sleeve type further includes shaft wheel type and holding shaft type rotating pairs. The shaft wheel type rotating pair includes a hollow shaft connected to a cylindrical piston sleeve and an annular wheel sleeve with a pipe sleeve, and the two sleeve each other in a sliding matching manner to form a mutually rotatable relationship; the holding shaft type rotating pair includes a semicircular wheel sleeve connected to the cylindrical piston sleeve and a semicircular tightening plate, and the two face other each in a concave-concave manner, and hold the hollow shaft connected to the cylindrical piston sleeve together by using the fastening member, and form a mutually rotatable relationship in a matching manner.

The shaft hole type rotating pair includes a shaft or a hole connected to the piston sleeve or a fixing support, and sleeves with a hole or a shaft on another object block of any shape in a matching manner to form a rotation relationship.

The monoaxial rotating pair includes an arc-shaped object block connected to the piston sleeve or a rod of the force transfer mechanism; the arc-shaped object block can prop with an object contact surface of any shape, and can perform self-rotation and movement to form a relatively self-rotary rotating pair.

The force transfer mechanism of the present invention is a combined mechanism formed by contact or connection between multiple structural forms that can implement a steering force transfer function and a force transfer piston, and mainly includes two types: a mutual propping type and a mutual puling type. The function of the force transfer mechanism is to transfer a force obtained by one piston during acting of the high hydraulic pressure to another piston in a different direction of the acting force, that is, transfer, in a steering manner, high hydraulic force to a direction in which a force is applied to the output element.

The high hydraulic force is pressure for injecting a high-level liquid within a pipeline having a particular height or for generating high hydraulic pressure by using prior art, for example, is implemented by using a high pressure pump liquid pressing method or applying a force to a piston on an airtight liquid container. The high-level liquid is used as an example in the present invention.

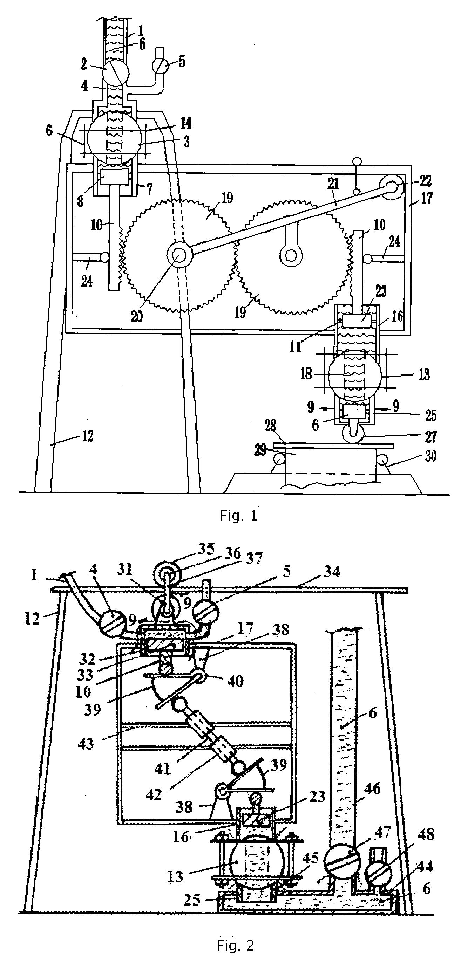

The work done by the high hydraulic force is output by the output element in two manners; one is that the output element is inserted into the occupation piston sleeve to bearing working of the high hydraulic force. When the high pressure liquid is input through the ball elbow mechanism, the ball elbow mechanism moves the liquid in the occupation sleeve thereof, directly transfers a force to work on the working piston to make it move outwards, and the occupation piston sleeve also follows the displacement for direct occupation, and this manner is referred as a direct type (as shown in FIG. 1, FIG. 6, FIG. 7, FIG. 9, and FIG. 10); The other is an indirect type, that is, the output element is inserted into the liquid container; when the high pressure liquid is input, the high pressure liquid does not directly transfer a force for working through the ball elbow mechanism, but enters the liquid container through the pipeline inside or outside the ball elbow mechanism, and then works on the working piston to make the output element move outwards. The stroke of the ball elbow mechanism only implements the function of entering the liquid container under high hydraulic pressure to occupy a space and resisting hydraulic pressure reverse propping force; when the output element moves outwards, the occupation piston sleeve also follows the displacement for indirect occupation (as shown in FIG. 2, FIG. 3, FIG. 4, and FIG. 5).

In a high hydraulic pressure state, a surface, facing the high hydraulic pressure, of the piston in the ball elbow mechanism is propped by the high hydraulic pressure in a reverse manner. During direct occupation, when applying a force to the working piston in the occupation piston sleeve, the high hydraulic pressure also props a force towards a reverse direction. To ensure that the occupation process of the ball elbow mechanism is not affected by a reverse propping surface, reverse propping needs to be resisted by using the force transfer mechanism. Therefore, this reverse propping force needs to be guided to above the anti hydraulic pressure reverse propping piston (briefly referred to as an "anti reverse block") for elimination.

Therefore, the force transfer mechanism in the ball elbow mechanism is usually located between anti reverse blocks in pairs, to transfer hydraulic pressure reverse propping forces in two directions to each other, to make them counteract with each other. Anti reverse blocks are respectively penetrated into anti reverse piston sleeves of joint and lateral movement rotating pairs in the ball elbow mechanism.

The force transfer mechanism in the present invention has multiple forms, for example, may be a mutual propping type force transfer mechanism, or a mutual pulling type force transfer mechanism.

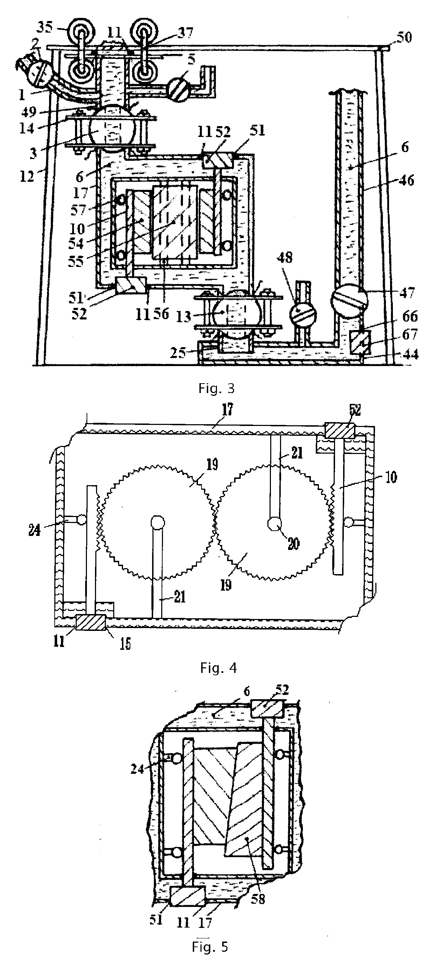

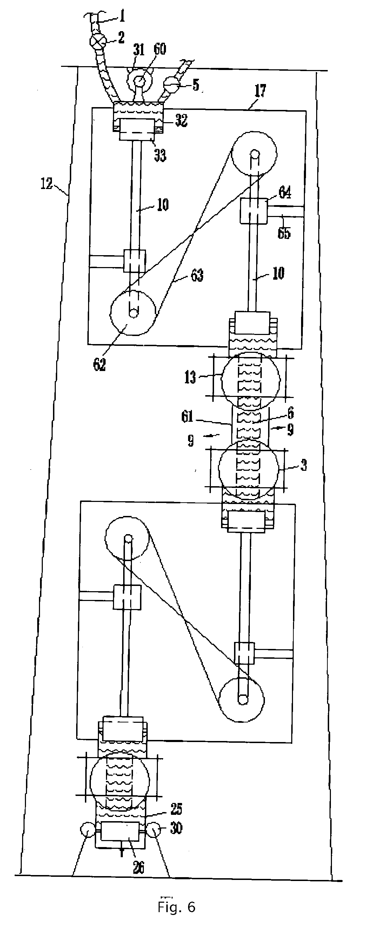

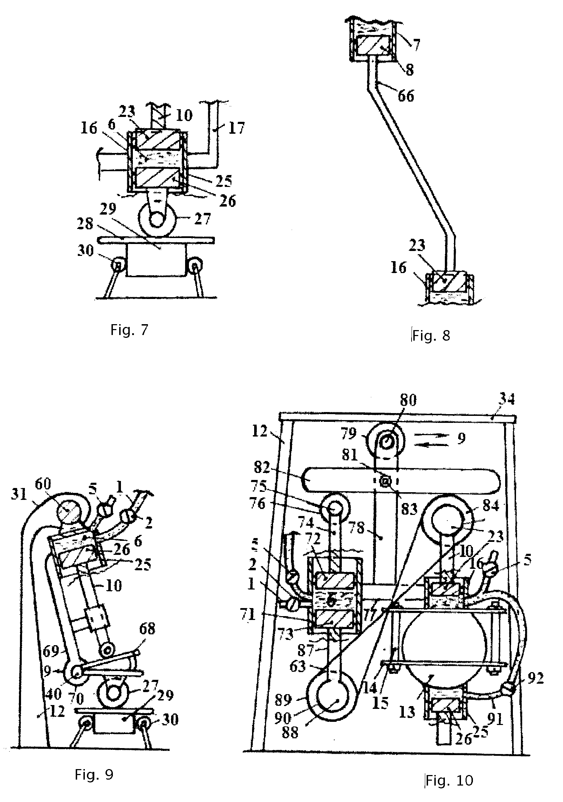

The mutual propping type force transfer mechanism may be all structural forms that can implement a force transfer function such as a rod propping type (as shown in FIG. 8), lever type, gear type (as shown in FIG. 1), a dual rotation angle type (as shown in FIG. 2), or a wheel band type (as shown in FIG. 6) mechanism, and the mutual pulling type force transfer mechanism may be all structural forms that can implement a force transfer or dual reverse mutual pulling function such as a gear type (as shown in FIG. 4), dual friction type (as shown in FIG. 3), or dual inclined plane mutual pulling type (as shown in FIG. 5) mechanism.

The hydraulic forming mechanism in the apparatus of the present invention includes a liquid container, a liquid pipeline, and an off-on valve. The liquid exists in the liquid container and the liquid pipeline to form hydraulic pressure. The working piston is inserted into a liquid container and is subject to a hydraulic pressure effect to work outwards. In the apparatus of the present invention, two rotating pairs can be connected by using a frame, and are respectively positioned at two vertex angle locations of diagonal lines of a virtual square frame. Centripetal anti reverse blocks are respectively sleeved on piston sleeves (also referred to as anti reverse piston sleeves), facing the intra-frame direction (that is, a centripetal direction) of the two rotating pairs, to contact or connect the mutual propping type force transfer mechanism with two centripetal anti reverse blocks. The mutual pulling type force transfer mechanism is applicable to the frame in which a fluid flows (that is, the frame is hollow, and the inside thereof can make the liquid flow), and the anti reverse block, in a direction away from the rotating pair, is connected to the structure of any form in the mutual pulling type force transfer mechanism; the frame in which the fluid flows can implement the function of two anti reverse block piston sleeves, and the structural features thereof are the same as those of the centripetal anti reverse piston sleeve. One of the two rotating pairs implements a joint elbow function, and the other one implements a lateral movement function.

Under the effect of the external force, the ball elbow mechanism of the present invention may generate a location deformation under the effect of the lateral movement mechanism, or may not generate a location deformation under the effect of the lateral movement mechanism (for example, the external force directly acts on the ball elbow mechanism). When the lateral movement mechanism is used, the lateral movement mechanism may have multiple forms, for example, the rolling friction type, shaft wheel type, and axial sliding rod type that will be mentioned below in this description and multiple structural forms that can make an object perform lateral movement in the prior art.

The lateral movement mechanism is connected to and matches a rotating pair (briefly referred to as "lateral movement pair" below) that implements a lateral movement function, and can help the lateral movement pair perform lateral movement in a single group upward movement manner. The other rotating pair is a joint elbow rotating pair (briefly referred to as "joint pair" below) that implements a joint elbow function.

Now this apparatus is described only by using single group upward lateral movement type in the indirect type occupation manner of the present invention as an example. The lateral movement pair is located above, and the joint pair is located below. The occupation piston sleeve connected to the joint pair is inserted into a liquid container. A working block is also inserted into the container. A liquid vertical pipe is connected to the container, and an off-on valve is connected between below the pipe and the container. In addition, an off-on valve and a liquid pipe are connected to the piston sleeve wall of the lateral movement pair in an internal communication manner. The piston sleeve, which is located above the ball or shaft and is opened or closed upwards, of the lateral movement pair is referred to as a lateral movement piston sleeve. The opening of the piston sleeve bears a high pressure reverse propping force when high hydraulic pressure appears. This force will affect an occupation action if not eliminated. Facing a horizontal direction of the upper opening thereof, there is a guide rail plate-like object connected to a ground fixing object, and the guide rail plate-like object matches a sleeve opening in a tight pressing manner and is flexibly connected to the sleeve opening, so that the lateral movement pair can only move along the guide rail plate when performing lateral movement. In this way, the hydraulic pressure reverse propping force can be resisted by using gravitational potential energy. All liquid containers, pipes, and the cavity of the ball elbow mechanism are filled up with liquids. When this apparatus is working, the valve is first opened and the liquid is discharged, and the working block is pressed and moves outwardly, and the external force is applied to the lateral movement pair to make the lateral movement pair perform lateral movement and the joint rotates on its axis. The entire ball elbow mechanism will generate a location deformation. The virtual diagonal line between the two rotating pairs changes the angle from inclination to straightness to generate a length difference, so as to push the occupation piston sleeve connected below the joint pair to push occupation in the liquid container. During the return, the valve is first closed, the high hydraulic pressure is cut off, and then the external force causes the lateral movement pair to return to the original location while the working block is also pushed back by the external force. The entire work cycle is completed. In addition, after the valve is closed, the pressure relief valve mounted on the wall of the container may also be first opened to relieve pressure. The liquid pressure applied to the working block is pressure for injecting a high-level liquid within a pipeline having a particular height or for generating high hydraulic pressure by using prior art, for example, is implemented by using a high pressure pump liquid pressing method or applying a force to a piston on an airtight liquid container. The pipeline high liquid level is used an example in this embodiment. The occupation manners of the present invention mainly include a direct type and an indirect type. The direct type is that when the ball elbow mechanism works and performs an action, the high hydraulic force directly transfers a force to the high pressure liquid by using the liquid in the ball elbow mechanism to work on the working block. At the same time, the occupation piston sleeve also follows the displacement. The indirect type is that the high hydraulic pressure liquid does not directly transfer a force for working through the ball elbow mechanism, but enters the liquid container through the pipeline inside or outside the ball elbow mechanism, and then works on the working block. The stroke of the ball elbow mechanism only implements the function of entering the liquid tank under high hydraulic pressure to occupy a space and eliminating the hydraulic pressure reverse propping force. The work receiving direction of this example is the opposite direction of the earth's gravity direction. In the present invention, the frame is not necessarily a shape, and needs to be different according to the form of the force transfer mechanism. If the force transfer mechanism is connected to an object other than the ball elbow mechanism, the frame may not be used. The input work of the present invention relies on an artificial external force or a force generated by this system. On one hand, this input work is to control each valve and to bring or remove high hydraulic pressure into the system of the present invention. On the other hand, this input work is to make the ball elbow mechanism change the angle in a round trip and make upper and lower balls or the shaft wheel laterally move work done in the round trip.

The ball elbow mechanism of the present invention has various movement forms, that is, single group upward movement, single group downward movement, and multiple group middle movement, and the like. If the ball elbow mechanism is vertically placed, the single group upward movement is that the upper ball, the shaft wheel, or the rod, and the piston sleeve perform lateral movement, by using a lower ball, the shaft wheel, or rod mutual propping as an elbow. Single group downward movement is the opposite case. Multiple group middle movement is that one group of the upper ball, shaft wheel, or rod block is used as an elbow, the other group of the lower ball, shaft wheel, or rod block is used as an elbow, and one ball or shaft wheel in each group is connected to perform lateral movement together.

In the direct type of the present invention, a valve is needed between the high hydraulic pressure pipeline and the ball elbow mechanism, to control off-on of the high hydraulic pressure. A pressure relief valve may also exist in the ball elbow mechanism system and the liquid tank. In use, all liquid tanks, the ball elbow mechanism, and the high pipe are all filled up with liquids. In addition, single group upward or downward movement also needs a translational rail plate rod and a piston sleeve sliding component. The structures and manners of the direct type and indirect type in the single group upward movement part can be the same, and are different in the single group downward movement, the specific structures are described in the accompanying drawings. The descriptions of their running processes are also described in the accompanying drawings. All the forces for opening and closing valves and pushing and pulling the ball elbow mechanism and the generated forces for eliminating the high hydraulic pressure in the present invention may be the forces generated by various energy sources in the prior art, and various force transfer mechanisms are also various mechanical electronic structures performing reciprocation, rotation and connection in the prior art.

The structures of the embodiments of the hydraulic working occupation apparatus of the present invention will be described in detail below with reference to the accompanying drawings.

### First embodiment

As shown in FIG. 1, FIG. 1 is a schematic structural diagram of a direct working occupation manner of the present invention. A force transfer mechanism of the occupation apparatus adopts a gear type force transfer mechanism, and the ball elbow mechanism is single group downward movement (that is, an external force acts on the lower part). The structure shown in FIG. 1 is described below.

As shown in Figure 1, the serial number 1 represents a pipe, which may be a high liquid level liquid pipe and may have a height of up to tens of meters, and is fixed based on prior art. If the high hydraulic pressure is obtained by other methods, the above pipe may also be very short. The serial number 2 is the off-on valve of the high hydraulic pressure pipe, and can control the disconnection/connection between the pipe 1 and the liquid below. The serial number 3 is an upper ball, and an opposite through hole is formed thereon for the liquid to flow through. The serial number 4 is a connection cylinder between the ball 3 and the valve 2, and is a cylinder of any shape. The serial number 5 represents a pressure relief valve connected to a pipeline passing through the wall surface of the connecting cylinder 4. The serial number 6 is a liquid. The serial number 7 is the first anti reverse piston sleeve that matches and that is connected to an opposite opening of the ball 3 in a sliding manner. The serial number 8 is an anti reverse block of any shape, and is sleeved and matches with the first anti reverse piston sleeve 7 in a sliding manner. Locations of all pistons and piston sleeves in the present invention can be exchanged inside and outside, and this is not emphasized in the following description. The serial number 9 is a driving force of various reciprocating or rotating or linkage connecting mechanisms in the prior art. In the present invention, the power for opening and closing the gate and pushing each apparatus may be power work or other external forces generated in the present invention. Because the driving force is the prior art, it is not described in detail in this description, and is represented only by using an external force 9. The serial number 10 is a force transfer rod of any shape connected to the piston. The serial number 11 is a sealing material between each piston sleeve and the piston, between the lower cylinder pipe and the orifice of the hydraulic container, and may be various sealing materials in the prior art. The serial number 12 is a bracket, and may be a rod-like or plate-like object of any shape, and may be connected to a ground fixing object. The serial number 13 represents a lower ball. The serial number 14 represents a piston sleeve clamping plate, and there is a hole on the plate surface, and the plate can be sleeved on the ball. The serial number 15 represents a clamping bolt or another clamping object for clamping. In FIG. 1, the bracket 12 is connected to the connecting barrel 4 and a ground fixing object. The serial number 16 represents a second anti reverse piston sleeve, which is in contact with the upper side of the lower ball 13 and whose nozzle matches the lower ball 13 in a sliding manner. The serial number 17 represents a frame, which is a tubular or rod-like object of any shape. It is usually tubular in indirect working, and the frame may be square. The frame 17 not only implements a function f positioning two rotating pairs, but also can be used as a base body of various brackets and supporting rods. The upper and lower sides of the frame 17 are respectively connected to the left and right points of the outer wall surfaces of the first anti reverse piston sleeve 7 and the second anti reverse piston sleeve 16. The serial number 18 represents a vertically-through through hole disposed in the middle of the upper ball 3 and lower ball 13. The serial number 19 represents a pair of gears meshed together. The serial number 20 represents a shaft mounted on a hole in the center of the gear 19.

The serial number 21 represents a bracket rod sleeved with the shaft or hole of the bracket rod 21 of FIG. 1, and the bracket rod 21 may be of any shape. The serial number 22 is a hole or shaft 22 on one end portion of the bracket rod 21, and sleeves and matches the shaft or hole on the frame 17 to facilitate rotation. The serial number 23 represents an anti reverse block penetrating into the inner wall of the second anti reverse piston sleeve 16 in a sliding connection manner. During assembling, one side of the anti reverse block 23 or 8 is connected to a force transfer rod 10, and the two force transfer rods 10 are provided with teeth. The gear 19 is meshed with two force transfer rods 10 teeth to teeth. The serial number 24 represents a supporting rod that is supported between the force transfer rod 10 and the frame 17 to ensure that the force transfer rod 10 is not inclined. Porous first and second flange plates are respectively connected to the outer walls of the first anti reverse piston sleeve 7 and the second anti reverse piston sleeve 16, and are clamped with a piston sleeve clamping plate 14 by using a clamping object 15, so that the first anti reverse piston sleeve 7 and the second anti reverse piston sleeve 16 can respectively rotate around adapted balls, and also drive the frame 17 to rotate around the upper and lower balls to change the angle. The serial number 25 is an occupation piston sleeve connected below the lower ball 13. The serial number 26 represents a working piston sleeved and matching with the occupation piston sleeve 25 in a sliding manner. The serial number 27 represents a pulley 27 connected below the working piston 26, and is mounted on a pulley base. The serial number 28 represents a power receiving plate in contact with a working piston 26. The serial number 29 represents an object block of any shape connected to the lower portion of the accommodating plate 28. The serial number 30 represents a guiding mechanism 30 of the prior art, and the object block 29 can move up and down within the guiding mechanism. If the power receiving object is a liquid, the work piston 26 may not be used.

In the structure shown in FIG. 1, a hydraulic forming mechanism for forming liquid pressure includes a pipe 1, a liquid 6 injected into the pipe 1, an off-on valve 2 mounted on the pipe 1, a bypass pipeline, and a pressure relief valve 5 on the bypass pipeline. The ball elbow mechanism includes a pair of ball rotating pairs, a force transfer mechanism respectively connected to the pair of ball rotating pairs, and a frame 17 used as a supporting member of each element. The ball rotating pair is assembled by the upper ball 3 (or the lower ball 13) and the following components: a first flange plate, a second flange plate, a piston sleeve clamping plate 14, a clamping bolt or a clamping object 15, and a first anti reverse piston sleeve 7 (or a second anti reverse piston sleeve 16). The force transfer mechanism adopts a gear type force transfer mechanism, including: an anti reverse block 8 partially disposed in the first anti reverse piston sleeve 7, a gear 19, an anti reverse block 23 partially disposed in the second anti reverse piston sleeve 16, a supporting rod 24, a bracket rod 21, and the like. In this embodiment, 12 is disposed on the ground for use as a supporting base of the foregoing elements.

The working process of the structure shown in FIG. 1 is as follows: in the high liquid pipe 1, the connection cylinder 4 and the upper and lower balls, and the upper and lower anti reverse piston sleeves are filled up with liquids 6. Then, the pressure relief valve 5 is closed first, then the valve 2 is opened to make the high pressure liquid connected; the high pressure liquid is transmitted to the working piston 26 through the force transfer mechanism, and after the working piston 26 presses the power receiving plate 28, the external force 9 pulls the occupation piston sleeve 25 to horizontally move along the left arrow direction in FIG. 1. At this moment, the lower ball 13 performs lateral movement and rotates with the second anti reverse piston sleeve 16, and the upper ball 3 rotates on its axis, so that the diagonal lines of the upper and lower rotating pairs of the ball elbow mechanism are changed from inclination to straightness and generate downward displacement, and when the working piston 26 works downwards, the occupation piston sleeve 25 immediately follows occupation. After working, the valve 2 is first closed and then the pressure relief valve 5 is opened to relieve pressure. The external force 9 then is applied back (that is, along the right arrow direction in FIG. 1) to make the occupation piston sleeve 25 return to the original location, and also push the working piston 26 back to the original location to prepare for working next time. The ball in the ball elbow mechanism of the present invention may also be replaced with a round shaft wheel under certain conditions.

The action process of this embodiment is a standard process of the present invention, and the following other direct type working manners adopt a process similar to the above process.

It should be noted that the names represented by the serial numbers in this embodiment are also applicable to other embodiments of the present invention, that is, the same serial number represents the same element in the embodiments, and the names of elements represented by the serial numbers are not described again below, and only structures and elements different from this embodiment are described.

### Second embodiment

As shown in FIG. 2, FIG. 2 is a schematic structural diagram of an indirect working occupation manner of the present invention. A force transfer mechanism of the occupation apparatus adopts a dual rotation angle type force transfer mechanism, and the ball elbow mechanism is single group upward movement (that is, an external force acts on the upper part). The structure shown in FIG. 2 is described below.

In this embodiment, there is a lateral movement mechanism connected to the top end of the frame 17, and the lateral movement mechanism is a shaft wheel type lateral movement mechanism. In FIG. 2, 31 represents a round wheel in the prior art, and is mounted on a wheel carrier and connected to a cylinder piston sleeve 32, one end of which is closed (briefly referred to as a sleeve 32 below). The anti reverse block 33 is inserted into the sleeve 32 and matches it in a sliding manner. The wheel 31 is propped below the guide rail plate 34. The guide rail plate 34 is connected to bracket 12. A round wheel 35 with a hanging wheel is placed above the guide rail plate 34, and a central hole or a shaft 36 thereof and the hole or shaft of the wheel 31 are movably connected by using a rod or plate 37 with a shaft or hole in a sleeving manner. One plate 37 may be disposed on either of left and right sides of the guide rail plate 34, and the two plates 37 may be connected to ensure stability. In this embodiment, the wheel 35 may not be used, and the number of guide rail plates 34 is changed to two, and the two guide rail plates 34 are respectively placed at upper and lower points of the wheel 31 in a parallel manner, and are both connected to the bracket 12 (not shown in the figure). In addition, other methods implementing the function in the prior art may also be used. The upper side of the frame 17 is connected to the outer wall surfaces of the left and right sides of the sleeve 32, and the lower side is connected to the two outer wall surfaces of the second anti reverse piston sleeve 16. A dual rotation angle type force transfer mechanism is provided in the space on the inner side of the frame 17.

In this embodiment, the dual rotation angle type force transfer mechanism adopts the following structure: a bracket 38 of any shape is connected to the inner side of each of the upper side and the lower side of the frame 17, and there are two triangular object blocks 39 (referred to as the steering angle blocks 39). There is a hole or shaft 40 on the vertex angle part thereof for sleeved connection with the shaft or hole on the bracket 38 and rotation can be performed. One of the two steering angle blocks 39 is located above and the other one is located below, each having a side facing the end part propping against the rod 10 on the anti reverse blocks 33 and 23 A dual circular head force transfer rod 41 is propped between the two steering angle blocks 39, and is a rod-like object with balls on both ends, and a porous positioning directional hoop 42 (briefly referred to as a hoop 42 below) of any shape is sleeved between the two ends thereof. The rod-like object 43 connected thereto is also connected to the side of the frame 17 to fix the hoop 42.

Because this embodiment adopts the upward translation manner, the downward occupation may use a liquid pressed type. The working piston may not be used; instead, an occupation piston sleeve 25 connected below the lower ball 13 is inserted into the orifice 45 of a liquid container 44 for occupation by using high hydraulic pressure on top. The liquid container 44 and the orifice 45 can match in a sliding manner and are sealed by a sealing material 11. The liquid container 44 is a polyhedral box or tubular object of any shape. A high-level liquid cylinder 46 is connected to one wall surface of the liquid container 44 in an internal communication manner. A valve 47 that can control off-on of the liquid is disposed on a lower portion of the cylinder 46. In addition, a pipe 1, a valve 2 and a pressure relief valve 5 connected to the high hydraulic pressure hard pipe in an internal communication manner are connected to the wall surface of the sleeve 32 in an internal communication manner. The wall surface of the liquid container 44 is also connected to a pressure relief pipe and a valve 48 in an internal communication manner.

When the occupation apparatus of this embodiment works, the pressure relief valve 5 and the valve 48 are first closed, the valve 2 and the valve 47 are opened, and then the external force 9 pulls the upper sleeve 32 to move along the direction of the right arrow in FIG. 2, at the same time, the ball elbow mechanism becomes inclined from being vertical, the occupation piston sleeve 25 is pressed downwards into the liquid container 44, to facilitate working of the high pressure liquid; however, after working, the valve 2 and the valve 47 are first closed, and then the pressure relief valve 5 and the valve 48 are opened; the external force 9 causes the sleeve 32 to move along the direction of the left arrow in FIG. 2 to return to the original location, for preparing for working next time.

### Third embodiment

As shown in FIG. 3, FIG. 3 is a schematic structural diagram of an indirect working occupation manner of the present invention. A force transfer mechanism of the occupation apparatus adopts a friction type force transfer mechanism, and the ball elbow mechanism is single group upward movement (that is, an external force acts on the upper part). The structure shown in FIG. 3 is described below.

FIG. 3 is one of the indirect type occupation manners. Different from the direct type, the high hydraulic pressure liquid can flow through the frame 17 thereof. The upper ball 3 is connected to an opened topless cylinder 49 in a sliding connection manner, and a guide rail flat plate 50 props against an upper port of the pipe 49, and there is a sealing material 11 there between; the plate 50 is connected to the bracket 12.

The form of FIG. 3 is different from that of FIG. 2, but the structure manners of the sleeve 32 and the pipe 49 are interchangeable, one is a top type, and the other is a topless type. The upper port of the pipe 49 is connected to a flange edge of any shape, and there is also a detachment prevention tightening structure between the lower surface thereof and two upper plate surfaces of the plate 50; the structure of the method is the same as that of FIG. 2, and the only difference is that there is one pair more, and therefore the reference signs in FIG. 2 are also used; the upper wheel serial number is 35; the lower wheel serial number is 31; the connection plate serial number is 37, and the only difference is that the connection plate 37 can be connected. The wall surface of the pipe 49 is also connected to a pipe 1, a valve 2, and a pressure relief valve 5 in an internal communication manner. Because they are all upward translations, the structures above and below the lower ball 13 in FIG. 3 and FIG. 2 are basically the same, except that there is no piston 23 in FIG. 3, and details are not described herein.

The upper and lower sides of the frame 17 are respectively connected to the outer wall surfaces of the first anti reverse piston sleeves 7 and 16 in an internal communication manner. On the outermost wall surface, opposite to the balls 3 and 13, of the frame 17, the respective openings 51 are inserted into the anti reverse block 52 in a sliding matching manner, and the anti reverse block 52 can replace the anti reverse block 23, and they have the same function. The rod 10 is connected to the side, facing the frame 17, of the anti reverse block 52, and is penetrated out of the frame from the opening 53 on the wall plate of the opposite frame 17. There may be a sealing material 11 between the hole 53 and the rod 10. The portions, which are penetrated out of the frame, of the rod 10 are each connected to a solid friction block 54, which is also in high friction close contact with both sides of an intermediate flowing friction block 55. In addition, a positioning rod 56 passes through the block 55 and is connected to the frame 17 respectively on upper and lower ends. This is a dual friction type. A single friction type may also be used. If it is a single friction type, the block 55 is not required. A supporting object 57 is connected between the side edge of the rod 10 and the frame 17.

The occupation method of FIG. 3 is the same as that of FIG. 2 except that in the high hydraulic pressure state, the two anti reverse blocks 52 resist the resistance of the high hydraulic pressure with each other by using the friction force between the blocks 54 and 55, so that during movement, the ball elbow mechanism is not affected by the hydraulic pressure reverse propping force.

It should be noted that FIG. 3 expresses the friction double reverse mutual pulling type in the mutual pulling type, and the mutual pulling type can also adopt the gear type shown in FIG. 4 and the inclined plane dual reverse mutual pulling type shown in FIG. 5. The basic structure of the gear in FIG. 4 is the same as the basic structure in FIG. 1 except that the form of the bracket rod 21 is another form. As shown in FIG. 4, the bracket rod 21 is connected to the upper and lower sides of the frame 17 respectively in two sections, and other pistons, rods, and supporting rods are all the same as those of FIG. 5 and FIG. 3. The serial number 58 in FIG. 5 represents a tensile block with a bevel.

### Fourth embodiment

As shown in FIG. 6, FIG. 6 is a schematic structural diagram of a direct working occupation manner of the present invention. A force transfer mechanism of the occupation apparatus adopts two groups of wheel band type force transfer mechanisms, which perform middle movement (that is, an external force acts on the middle part). The structure shown in FIG. 6 is described below.

FIG. 6 is a dual group middle movement type. In this example, a shaft wheel type structure or a ball type may be used above the upper ball of this example. The structures of the upper piston sleeve 32 and the piston 33 in FIG. 6 are basically the same as that in FIG. 2 except that the wheel 35 and the plate 37 are not used above it. A wheel carrier and a round wheel 31 are also connected to the upper cover surface of the sleeve 32. Because the lateral movement is not needed, the wheel 31 and the bracket 12 may be connected and fixed, and the shaft 60 of the wheel 31 acts as a wheel, and is sleeved and rotatable with the shaft 31 in a sliding connection manner. In order to indicate the form of the force transfer mechanism, a wheel band type force transfer mechanism is used in the figure.

The biggest difference between the dual group middle movement and the single group in this example is that to perform dual group middle movement, two groups of force transfer mechanisms are needed, and two balls or shaft wheels that are nested together are also needed, so as to connect the two groups of force transfer mechanisms together for force transfer. This force transfer may also be performed by using liquids or by using a mechanical connecting rod method. The present invention adopts the liquid type force transfer method in FIG. 6. As shown in FIG. 6, the lower ball 13 of the upper group and the upper ball 3 of the lower group are respectively connected to a ball connection pipe 61, and the two connected balls and the pipe 61 are filled up with liquids 6. Other structures are the same as the aforementioned structure of the present invention except that the above structure is different from the single group.

The lower portion of the second group of force transfer mechanisms of this embodiment is substantially the same as that of FIG. 1, except that the wheel and the wheel base 27, the power receiving plate 28 and the block 29 are not used, and only the guiding mechanism 30 is kept. The occupation piston sleeve 25 is inserted into the guiding mechanism 30, and the working piston 26 directly works on a work receiving object.

In this embodiment, in the force transfer mechanism of the wheel band type, a reel 62 is connected to the end of the rod 10, a soft cord shaped object 63 is interleaved between the two reels, a positioning rod sleeve 64 is sleeved in the rod 10, and the supporting rod 65 is connected to the sleeve 64 and the frame 17.

When the occupation apparatus of this embodiment works, after the pipe 1 is connected to the high pressure liquid, the external force 9 pushes or pulls the pipe 61 to move towards the inclined beneath of the left side of FIG. 6.

It should be noted that the structures of the embodiments of the present invention are not fixed, and the various parts between them may be interchanged or combined with each other as long as the objective and function of the present invention are achieved.

For example, a wall plate of the liquid container 44 in FIG. 3 may be provided with a hole 66 for insertion of a piston 67, they are sealed and they can match each other in a sliding manner. The indirect type working not only can be implemented by using the high pressure liquid in the cylinder 46, but also can be implemented by using the high hydraulic pressure in the pipe 1 to directly applying a force to the piston 67. The pipe 1, the valve 2, and the pressure relief valve 5 in the embodiments of the present invention may be disposed at various appropriate locations of the system, and are not necessarily entirely based on the embodiments of the present invention.

For another example, the structure of the ball rotating pair may be replaced with the shaft rotating pair in the direct type occupation manner in FIG. 7. This structure uses the lower end of FIG. 1 as an example, removes the lower ball 13 of FIG. 1, and connects the second anti reverse piston sleeve 16 to the occupation piston sleeve 25 into a whole, provided that the structures of other parts are all the same as that of FIG. 1 (that is, the wheel 27 in FIG. 1 is the rotating pair in this example). In the present invention, the up and down directions are relative, and the direction of the earth is not necessarily taken as the down direction.

The form in which force is directly transferred by using the inclined rod 66 shown in FIG. 8 may also be used. In the figure, the rod 66 forms a certain angle with the force application direction of the block 8, and then forms an opposite angle with the force receiving direction. It should be noted that, in any form of the present invention, each ball elbow mechanism needs to have one more hydraulic pressure reverse propping surface. If it is not eliminated, the operation and objective of the present invention will not be completed. In the manner of single group upward or downward movement, the connection cylinder 4 and the guide rail plates 34 and 50 in this description need to be relied on to implement a reverse block function. They may not be used in a dual group manner, provided that the two groups perform occupation. The ball in the present invention can be a standard round or a near-round ball that can implement a ball function.

### Fifth embodiment

As shown in FIG. 9, FIG. 9 is a schematic structural diagram of an upper occupation manner without a lower ball working manner in a direct type of the present invention. The force transfer mechanism of the occupation apparatus adopts a single rotation angle type force transfer mechanism, and the ball elbow mechanism moves downwards (that is, an external force acts on the lower part). The structure shown in FIG. 9 is described below. As shown in FIG. 9, the structures and functions of the occupation piston sleeve 25, the working piston 26, the valve 5, the valve 2 and pipe 1 in the figure are the same as those in FIG. 6 and FIG. 2, and will not be described herein again. The working piston26 works through the rod 10 connected thereto and directly presses the block 29 through the rotatable triangle block 68 to do work. When the working piston 26 is displaced towards the outside of the occupation piston sleeve 25 for working, the external force 9 simultaneously applies a force, and the occupation piston sleeve 25 is pulled by the connection rod 69 to make it rotate around the wheel 31, and the occupation piston sleeve 25 is displaced from large angle inclination to small angle straightness. Therefore, the occupation piston sleeve 25 and the working piston 26 are synchronously displaced to achieve the objective of occupying the liquid level. In the figure, the wheel 31 is sleeved with the hole 60 on the rod 12. The rod 69 is a rod-like object of any shape. One end portion thereof is connected to the occupation piston sleeve 25, and the other end portion has a hole sleeve 70 that matches the shaft on the block 68 in a sleeving manner. The other side of the block 68 is connected to the wheel 27.

### Sixth embodiment

As shown in FIG. 10, FIG. 10 is a schematic structural diagram of a direct type downward working occupation manner of a supporting point movement type of the present invention. A force transfer mechanism of the occupation apparatus adopts a wheel band type force transfer mechanism, and the ball elbow mechanism moves upwards (that is, the external force acts on the upper part). The structure shown in FIG. 10 is described below.

In the figure, 71 is a through cylindrical piston sleeve whose wall surface is connected to the pipe 1 in an internal communication manner, and the upper and lower ports thereof are respectively sleeved with pistons 72 and 73, and the piston 72 is connected to a rod 74. The round wheel 76 and the hole or shaft 75 on the rod 74 match each other in a sleeving manner. The piston sleeve 71 is connected to the second anti reverse piston sleeve 16 into a whole by using a rod or pipe 77. A rod-like object 78 is connected to the middle of the rod 77, and a wheel 79 is disposed on an upper end part thereof for matching with the hole of the rod 78 in a matching manner by using the shaft 80. There is a shaft or hole 81 in the middle of the rod 78. There is another rod-like object, which may be referred to as a balance rod 82, with a hole or shaft 83 in its middle portion for matching with the shaft or hole 81 on the rod 78 in a sleeving manner. The rod 82 is crossed with the rod 78 by 90 degrees. The left end of the rod 82 is pressed on the wheel 76, and the right end is pressed on a large wheel 84. The central shaft or hole 85 of the wheel 84 matches the hole or shaft 86 of the rod 10 in a sleeving manner. A piston 23 is connected to the lower part of the rod 10. The structure below them is the same as that in FIG. 1. If this example is used in the indirect type, the following is the same as FIG. 2.

Further, a rod 87 is connected to the piston 73, and there is a shaft or hole 88 on a lower end portion thereof for matching with the hole or shaft 90 on the large wheel 89 in a sleeving manner, and a soft cord shaped object 63 is sleeved on a circumferential surface of the wheels 89 and 84 in a crossed manner. There may be grooves on the circumferential surface of the wheels 89 and 84 to embed the cord 63. The opening on the wall surface of the sleeves 71 and 16 is connected to the pressure relief valve 5 in an internal communication manner. In addition, a guide rail plate rod is connected to the object on the ground by using the bracket 12.

When the occupation apparatus of this embodiment works, the valve 5 is closed first, then the valve 2 is opened, the external force 9 pulls the rod 78 to translate, and the second anti reverse piston sleeve 16 and the piston 23 press down the lower ball 13 and the occupation piston sleeve 25, to perform occupation for the working piston 26. During the return, the valve 2 is first closed, the valve 5 is then opened to relieve the pressure, and then the external force 9 pulls back the rod 78.

The actions of the various embodiments of the present invention are the same as the foregoing. In the example of the figure, the upper port of the sleeve 71 may be sealed by the plate without the piston 72 and the rod 82, and the same working effect can be achieved.

In addition, the liquid 6 may not flow in the ball or shaft wheel of the present invention. The liquid 6 may be in internal communication with the second anti-reverse sleeve 16 and the occupation piston sleeve 25 via an external pipeline 91 and a valve 92 (as shown in FIG. 10). The two ends of the pipe 91 are respectively connected to the wall openings of the second anti reverse piston sleeve 16 and the occupation piston sleeve 25 in an internal communication manner, as shown in this example of this figure.

In addition to the structures of the above embodiments, the present invention may also adopt the following structure.

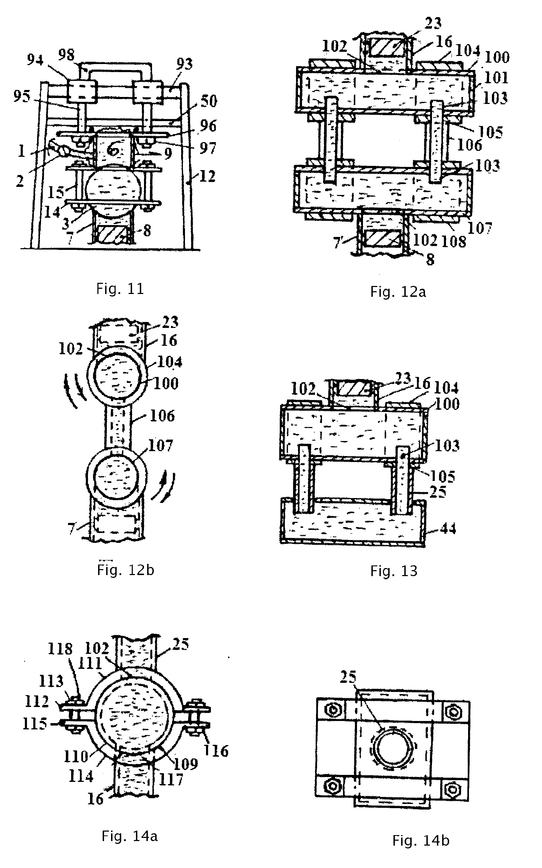

As shown in FIG. 11, FIG. 11 is a partial schematic diagram of a single group upward translation structure of a sliding type. This embodiment is another translation structure of the ball 3 and the sleeve 49 of FIG. 3 of the present invention. In the figure, 93 is a long-axis rod-like object whose cross section is of any shape. The rod 93 is sleeved with an axial bearing 94, and the outer surface of the bearing 94 is connected to a screw 95. One end of the screw head of the rod 95 passes through the hole 97 on the flange plate 96 of the upper opening of the sleeve 49 and is then fastened by using a nut. The rod 95 passes from the outside of the plate 50. In order to maintain balance, one bearing 94 may be disposed on each of the four directions of the plate 96, and the bearings may be connected to each other and fixed by using a connecting rod 98. The rod 93 and the plate 50 are connected to the bracket 12 and the object on the ground together with the plate 50.

FIG. 12a is a middle cross-sectional front view of a dual shaft wheel type in place of a double ball, and FIG. 12b is a left view of FIG. 12a. As can be learned from FIG. 12a and FIG. 12b, in this embodiment, the ball can also be replaced with a shaft wheel type rotating pair. In this embodiment, replacing the dual ball in FIG. 6 is used as an example for description. In FIG. 12a and FIG. 12b, the serial number 100 represents a cylindrical upper cylindrical shaft having a cavity therein, and two ends thereof are provided with cover plates 101 for connection and sealing. The upward side of the upper cylindrical shaft 100 is provided with an opening 102 to which the second anti reverse piston sleeve 16 is connected. The downward side of the upper cylindrical shaft 100 is provided with an elongated opening 103 on each of left and right sides. A wheel sleeve 104 is further disposed, and is a cylinder whose cross section is circular; an opening 105 is disposed on a wall plate surface of one direction thereof, and a pipe 106 is connected to the opening edge in an internal communication manner. The wheel sleeve 104 is sleeved on the outer circumferential surface of the upper cylindrical shaft 100 and is rotatable about the upper cylindrical shaft 100. The lower cylindrical shaft 107 has the same structure as that of the upper cylindrical shaft 100 except that the direction is opposite, and the shaft 107 is also sleeved with a wheel sleeve 108 having the same structure as that of the sleeve 104 and the direction is opposite. They are connected to the port of the pipe 106 in an internal communication manner. During action, the sleeves 104 and 108 do not rotate, and the upper cylindrical shaft 100 and the lower cylindrical shaft 107 rotate respectively.

FIG. 13 is a middle cross sectional view of a shaft wheel type with a single ball. The upper or lower ball in the single group upward movement or downward movement may also be replaced with the shaft wheel shown in FIG. 12, and only a group of shaft wheels in FIG. 12 need to be used; the size of the pipe 106 in FIG. 12 can be enlarged for use as a sleeve 25 or sleeve 32. In this example of this figure, replacing the lower ball 13 in FIG. 2 is used as an example.

FIG. 14a is a schematic diagram of the shape of a shaft wheel of a dual arc holding shaft type, and FIG. 14b is a top view of FIG. 14a. The difference between this embodiment and FIG. 13 is that the wheel sleeve of this embodiment is formed by opposite holding of two semicircular arc plates. The structure of the cylindrical shaft 109 of this embodiment is the same as that of the upper cylindrical shaft 100 of FIG. 12. If there is a single wheel sleeve, the lower opening 110 of the shaft 109 may be disposed below the upper opening 102, and if there are two wheel sleeves, as shown in FIG. 12, the opening is the same as that of FIG. 12. In this embodiment, there is a single sleeve. The wheel sleeve is divided into upper and lower parts, and the upper half is a semi-arc plate 111, and the arc shape is consistent with the outer circumference arc of the shaft 109. Two ends of the plate 111 are connected to a tightening plate 112, on which an opening 113 is disposed. The lower half 114 of the wheel sleeve has a same shape as that of the upper half, except that its axial length is longer than that of the plate 111, and four corner portions thereof are also connected to a clamping plate 115, on which an opening 116 is also disposed. An opening 117 is disposed in the middle of the sleeve 114. The periphery of the opening 117 of the outer arc surface of the sleeve 114 is connected to a sleeve 16, 25, or 32, and the arc of the sleeve 114 is consistent with that of 111. In addition, the bolt 118 tightens the two clamping plates with the nuts through the openings 113 and 116, so that the upper and lower halves of the wheel sleeve hold the shaft 109. In addition, other methods in the prior art can also be used to clamp the upper and lower wheel sleeves. In this example, the shaft 109 and the wheel sleeve are relatively rotatable to form a rotating pair.

It should be noted that, in the examples of the present invention, if a lateral movement mechanism is used, the bracket 12 needs to be used together. If the lateral movement mechanism is not used, the bracket 12 may not be used.

Preferred implementations of the present invention are described above, and it should be noted that those of ordinary skill in the art can also make several improvements and refinements without departing from the principle of the present invention. These improvements and refinements are also considered as the protection scope of the present invention.

## Claims

1. A hydraulic working occupation apparatus, **characterized in** comprising:
a hydraulic forming mechanism for forming liquid pressure;
an output element, a part of which is placed in a liquid;
a ball elbow mechanism that is connected to the hydraulic forming mechanism and that can generate a location deformation under the effect of an external force; and
an occupation piston sleeve connected to the ball elbow mechanism, wherein
when a high pressure liquid is input, the high pressure liquid acts on the output element, so that the output element moves towards outside of the liquid, thereby outputting work done by liquid pressure; the ball elbow mechanism generating the location deformation drives the occupation piston sleeve to move, so that the occupation piston sleeve and a liquid therein make up for a liquid space left by the output element after the output element moves outwards, and
when the output element moves back into the liquid, the ball elbow mechanism and the occupation piston sleeve return to original locations.

2. The hydraulic working occupation apparatus according to claim 1, **characterized in that**, the location deformation of the ball elbow mechanism under the effect of an external force includes:
under the effect of the external force, the ball elbow mechanism rotate to change an angle; and
the ball elbow mechanism generate a displacement in a direction having an included angle with a direction of the external force when the ball elbow mechanism changes the angle.

3. The hydraulic working occupation apparatus according to claim 1, **characterized in that**, when the high pressure liquid is input and the high pressure liquid makes, by using the ball elbow mechanism, the output element move outwards, the occupation piston sleeve performs direct occupation, or when the high pressure liquid is input and the high pressure liquid flows into a liquid container to make the output element move outwards, the occupation piston sleeve performs indirect occupation.

4. The hydraulic working occupation apparatus according to any one of claims 1 to 3, **characterized in that** the ball elbow mechanism comprises:
a ball rotating pair or a shaft rotating pair;
a force transfer mechanism connected to the ball rotating pair or the shaft rotating pair; and
a frame connected to the ball rotating pair or the shaft rotating pair.

5. The hydraulic working occupation apparatus according to claim 4, **characterized in that**, the shat rotating pair is a shaft sleeve type shaft rotating pair, a shaft hole type shaft rotating pair, or a monoaxial shaft rotating pair.

6. The hydraulic working occupation apparatus according to claim 5, **characterized in that**, the shaft sleeve type shaft rotating pair is a shaft wheel type shaft rotating pair or a holding shaft type shaft rotating pair.

7. The hydraulic working occupation apparatus according to claim 4, **characterized in that**, the force transfer mechanism is a mutual propping type force transfer mechanism or a mutual pulling type force transfer mechanism.

8. The hydraulic working occupation apparatus according to claim 7, **characterized in that**, the mutual propping type force transfer mechanism is a rod propping type, lever type, gear type, dual rotation angle type, or wheel band type mechanism.

9. The hydraulic working occupation apparatus according to claim 7, **characterized in that**, the mutual pulling type force transfer mechanism is a gear type, dual friction type, or dual inclined plane mutual pulling type mechanism.

10. The hydraulic working occupation apparatus according to claim 1, **characterized in that**, generating, by the ball elbow mechanism, a location deformation under the effect of an external force is implemented by using a lateral movement mechanism.
